# EUROPÄISCHE PATENTSCHRIFT

(11) **EP 2 758 820 B1**
(45) Veröffentlichungstag und Bekanntmachung des Hinweises auf die Patenterteilung: **12.08.2020**
(21) Anmeldenummer: 12774941.4
(22) Anmeldetag: 17.09.2012
(51) Int. Cl.: G02B 6/44, E21B 47/12

(54) **FASEROPTISCHES KABEL**
OPTICAL FIBRE CABLE
CABLE À FIBRE OPTIQUE

(30) Priorität: 20.09.2011 DE 102011113683
(43) Veröffentlichungstag der Anmeldung: 30.07.2014
(73) Patentinhaber: NKT Photonics GmbH, 51063 Köln (DE)
(72) Erfinder: KURTSCHEID, Friedhelm, 51061 Kölm (DE); HILL, Wieland, 51519 Odenthal (DE); FROMME, Martin, 51069 Köln (DE)
(74) Vertreter: Graefe, Jörg
(86) Internationale Anmeldenummer: PCT/EP2012/068270
(87) Internationale Veröffentlichungsnummer: WO 2013/041494

(56) Entgegenhaltungen:
- DE-A1- 4 342 151
- DE-U1-202005 018 553
- GB-A- 2 368 921
- US-A1- 2006 120 675
- US-A1- 2008 247 718
- US-A1- 2009 060 430
- US-B1- 6 907 170

## Beschreibung

Die vorliegende Erfindung betrifft ein faseroptisches Kabel für den Einsatz in einem Bohrloch gemäß dem Oberbegriff des Anspruchs 1. Das faseroptische Kabel wird im Nachfolgenden auch Wireline-Kabel genannt.

Definitionen: Wenn im Folgenden die Begriffe Licht, optische Strahlung oder optisches Signal verwendet werden, ist damit elektromagnetische Strahlung im optischen Spektralbereich, insbesondere vom XUV bis zum FIR, gemeint. Entsprechend soll im Rahmen dieser Anmeldung ein Lichtwellenleiter als Übertragungsmedium für elektromagnetische Strahlung im optischen Spektralbereich dienen.

In Erdöl- und Ergaswells werden zu sensorischen, wie auch zu wartungstechnischen Zwecken multifunktionale mobile Werkzeuge ("Traktoren") eingesetzt. Diese werden konventionell über bekannte Wireline-Kabelkonstruktionen mit Energie versorgt. Bis dato ausgeführte Wireline-Kabel mit in einem Edelstahlröhrchen integrierten Lichtwellenleitern sind in der praktischen Anwendung zur verteilten faseroptischen Sensorik unzureichend, da unterschiedliche Dehnungskoeffizienten von Kabel und Röhrchen beim Ein- und Herausführen des Kabels, sowie beim Fahren des Traktors extreme Längszugskräfte und Torsion auftreten können. Diese können zu lokalen mechanischen Deformationen bis hin zum Abriss des Röhrchens führen. Die alternative Ausführung ohne ein die Lichtwellenleiter umschließendes Röhrchen zum hermetischen Schutz ist ebenfalls bekannt. Die dabei vorgeschlagenen Konstruktionen lassen zwar höhere Dehnungen zu. Jedoch ist zu erwarten, dass bei den in der Anwendung vorliegenden Längszug- und Torsionskräften beispielsweise irreversible Dehnungen auftreten können, die zu lokalem Stress (lokale Dämpfungszunahme) auf den Sensorfasern führen. Zusätzlich sind durch den Verzicht auf ein die Lichtwellenleiter umschließendes Röhrchen diese nicht hermetisch geschützt, welches nachteilig in Bezug auf beschleunigte Alterungseffekte (Hydrogen-Ingression, hohe Temperaturen im Bohrloch von 200°C bis 300°C oder höher) in dieser Applikation ist. Beide oben genannten Varianten weisen den Nachteil auf, dass im dauerhaften Betrieb des Wireline-Kabels mechanische Kräfte (Längszugkräfte und Torsion) zu temporären oder dauerhaften lokal unterschiedlichen Beeinträchtigungen der sensorischen Eigenschaften von Lichtwellenleitern als ortsverteilte faseroptische Sensoren führen können. Diese beeinträchtigten die Qualität von Kalibrierung und Messauflösung von faseroptischen Verfahren zur Messung physikalischer Größen.

In Wassink, Sandra, EX-Zeitschrift 2011, Seite 34 - 41, "Wireline -...", sind die Vorteile der Wireline-Technik (ab Seite 38) bei der Öl- und Gasförderungen an Land beschrieben. Über die Applikation "Wireline" sind technische Einrichtungen umgesetzt, welche die Messungen innerhalb eines Bohrloches als Eingriff während gleichzeitiger Förderung zulassen.

In der WO 2011/037974 A2 wird die Wireline-Technik mit der Erweiterung von zusätzlichen Wartungsaufgaben innerhalb eines Bohrloches beschrieben. Eine Antriebseinheit (Traktor) fährt zur Durchführung unterschiedlicher Aufgaben (Wartung, Messung) das unterirdische Bohrloch ab und über das Wireline-Kabel erfolgen die Spannungsversorgung und der Datentransfer.

Der Traktor und das Wireline-Kabel verbleiben permanent in dem Bohrloch und im Bedarfsfall kann der Traktor mit dem Wireline-Kabel wieder zum Ausgangspunkt des Bohrloches zurückgezogen werden. Über den Einsatz von optischen Fasern innerhalb des Wireline-Kabel wird gleichzeitig die optische Sensorik (Messung) von physikalischen Größen wie zum Beispiel Temperatur realisiert.

Die WO 2011/037974 A2 behandelt in diesem Zusammenhang die Anforderungen an die Torsionseigenschaften, das Kabelgewicht und den Reibwiderstand für die Wireline-Kabel. Hierzu sind in dieser Schrift verschiedene konstruktive Lösungen von Wireline-Kabeln dargestellt, die im Vergleich zu den bestehenden Wireline-Kabeln verbesserte Torsionseigenschaften (torque balanced) realisieren sollen.

Zur Reduzierung des Reibwiderstandes wird die Lösung über einen zusätzlichen glatten Außenmantel bei dem Wireline-Kabel dargestellt. Es besteht die Frage, inwieweit die glatten Eigenschaften eines dünnen Kunststoffmantels unter erschwerten Umgebungsbedingungen erhalten bleiben. Ebenso besteht das Risiko, dass der Mantel sich abreiben und/oder aufreißen kann.

In der US 7,324,730 B2 ist dargestellt, dass die Verwendung von Edelstahlröhrchen zum Schutz von optischen Fasern in der Wireline-Kabel-Applikation nicht oder nur unzureichend geeignet ist. Aufgrund von hohen Kabeldehnungen, die bei den Wireline-Kabeln innerhalb der Applikation auftreten können, besteht bei den Edelstahlröhrchen das Risiko von Deformationen. Im schlimmsten Fall werden die optischen Fasern innerhalb der Edelstahlröhrchen ebenfalls beschädigt.

Als Neuerung werden in der US 7,324,730 B2 konstruktive Lösungen ohne metallische Röhrchen als unmittelbaren Schutz für die optischen Fasern aufgezeigt. Mit diesen Lösungen sollen Beschädigungen der optischen Fasern im Falle von höherer Kabeldehnung zu vermeiden sein.

Entsprechend der vorliegenden Erkenntnisse sind auch bei den Konstruktionen nach WO 2011/037974 A2 keine zusätzlichen Konstruktionsmerkmale aufgezeigt, die bei hoher Dehnung des Wireline-Kabels ein Edelstahlröhrchen ausreichend gegen Deformation oder Beschädigung schützen könnten.

Somit bestehen in Verbindung mit dem ortsveränderlichen Einsatz eines Traktors keine geeigneten Schutzmaßnahmen für die sichere Verwendung von Edelstahlröhrchen bei der Wireline-Kabel-Applikation. Es ist daher wünschenswert, über eine geeignete Konstruktion eines Wireline-Kabels mit in einem Röhrchen, beispielsweise aus Edelstahl, und mindestens einem integrierten Lichtwellenleiter die verteilte faseroptische Messung von physikalischen Größen entlang der Kabelstrecke in der oben genannten Applikation dauerhaft zu ermöglichen und die oben genannten Nachteile zu minimieren.

Ein faseroptisches Kabel der eingangs genannten Art ist aus der US 6 907 170 B1 bekannt. Eines der darin beschriebenen Kabel umfasst ein Edelstahlröhrchen mit einer darin befindlichen Lichtleitfaser. Weiterhin ist außerhalb des Röhrchens eine leitende Schicht angeordnet, die elektrische Signale übertragen kann. Zwischen dem Röhrchen und der leitenden Schicht ist eine Teflonschicht angeordnet.

Ein weiteres faseroptisches Kabel ist aus der US 2006/0120675 A1 bekannt. Das darin beschriebene Kabel umfasst ein Edelstahlröhrchen mit einer darin befindlichen Lichtleitfaser. Weiterhin sind außerhalb des Röhrchens eine Verstärkungslage aus Aramidfasern und außerhalb der Verstärkungslage Teflonschichten zur Reibungsverminderung vorgesehen.

Das der vorliegenden Erfindung zugrunde liegende Problem ist die Schaffung eines faseroptischen Kabels der eingangs genannten Art, bei dem das Risiko der Beschädigung des integrierten Röhrchens reduziert ist.

Dies wird erfindungsgemäß durch ein faseroptisches Kabel mit den Merkmalen des Anspruchs 1 erreicht. Die Unteransprüche betreffen bevorzugte Ausgestaltungen der Erfindung.
Gemäß Anspruch 1 ist vorgesehen, dass das faseroptische Kabel Verstärkungsmittel umfasst, die zwischen dem Röhrchen und den Trennmitteln angeordnet sind.
Die mechanische Entkopplung der einzelnen Komponenten des Kabels voneinander reduziert das Risiko der Beschädigung des integrierten Röhrchens.
Die Verstärkungsmittel können Zugkräfte aufnehmen und beispielsweise Fasern, insbesondere Aramidfasern, umfassen oder aus Fasern, insbesondere Aramidfasern, bestehen. Alternativ können die Verstärkungsmittel als Armierung, insbesondere als Kreuzschlag ausgebildet sein.
Es kann vorgesehen sein, dass die Trennmittel eine weitere Folie umfassen, wobei zwischen den beiden Folien der elektrische Leiter angeordnet ist. Auf diese Weise kann auch eine mechanische Entkopplung des Röhrchens und der Verstärkungsmittel von den außerhalb der äußeren der beiden Folien angeordneten Lagen oder Teilen des Kabels erfolgen.
Es besteht beispielsweise die Möglichkeit, dass die äußere der beiden Folien von Teilen eines Zugseils umgeben ist, das vorzugsweise leitend sein kann. Auf diese Weise kann einerseits eine Spannungsversorgung über das Kabel gewährleistet werden, wobei beispielsweise ein zweiter Leiter auf der Außenseite des Röhrchens angeordnet sein kann. Andererseits kann die äußere der beiden Folien eine mechanische Entkopplung der inneren Lagen des Kabels von dem äußeren Zugseil gewährleisten, das ebenfalls der Aufnahme von Zugkräften dienen kann.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: einen schematischen Querschnitt durch ein faseroptisches Kabel, das kein erfindungsgemäßes Kabel ist;
- Fig. 2: einen schematischen Querschnitt durch ein faseroptisches Kabel, das kein erfindungsgemäßes Kabel ist;
- Fig. 3: einen schematischen Querschnitt durch eine erste Ausführungsform eines erfindungsgemäßen faseroptischen Kabels;
- Fig. 4: einen schematischen Querschnitt durch eine zweite Ausführungsform eines erfindungsgemäßen faseroptischen Kabels;
- Fig. 5: einen schematischen Querschnitt durch ein faseroptisches Kabel, das kein erfindungsgemäßes Kabel ist;
- Fig. 6: einen schematischen Querschnitt durch ein faseroptisches Kabel, das kein erfindungsgemäßes Kabel ist;
- Fig. 7: einen schematischen Querschnitt durch ein faseroptisches Kabel, das kein erfindungsgemäßes Kabel ist.

In den Figuren werden gleiche oder funktional gleiche Teile oder Komponenten mit den gleichen Bezugszeichen versehen.

Bei den Wireline-Kabeln gemäß dem Stand der Technik besteht aufgrund von Dehnungen das Risiko der Beschädigung des integrierten Edelstahlröhrchens.

Die Erfindung soll Maßnahmen zum Schutz eines metallischen Röhrchens (vorzugsweise aus Edelstahl, alternative Nickellegierungen, Aluminium, ...) aufzeigen, so dass die Vorteile des hermetisch geschlossenen Metallröhrchens als Umhüllung von optischen Fasern bei der "Down hole Wire line Cable Application" realisiert werden.

Im Gegensatz zur Verwendung von optischen Fasern zur Kommunikationszwecken, bestehen bei der faseroptischen Sensorik (beispielsweise DTS - distributed temperature sensing) besondere Anforderungen an eine mechanisch stressfreie Sensorstrecke. Zeitlich oder örtlich variante Zusatzdämpfungen durch temporären oder lokalen mechanischen Stress können direkt die Messung der physikalischen Größe beeinträchtigen, welches eine erneute Kalibrierung des Messsystems erfordern könnte.

Die optischen Fasern sollen daher für die Sensorik (vornehmlich DTS) mechanisch stressfrei einzusetzen sein.

Die Verfügbarkeit und Zuverlässigkeit für den Einsatz der optischen Fasern wird erhöht und die Ausfallrate gleichermaßen reduziert. Eine Unterbrechung bedingt durch den Ausfall der optischen Fasern beim Betreiben des Downhole Wells soll vermieden werden.

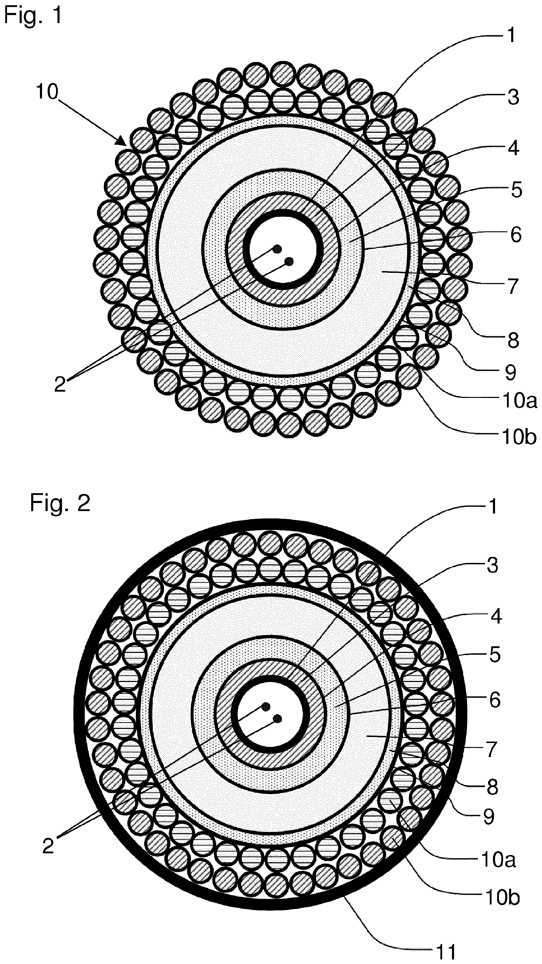

Als erster Lösungsansatz (Fig. 1 bis Fig. 4) soll ein Downhole Wireline Cable mit optischen Fasern zum Schutz in einer metallischen Umhüllung (vorzugsweise ein Edelstahlröhrchen) erweitert werden.

Die ursprünglich mechanischen Eigenschaften des Downhole Wireline Cable sollen hierbei erhalten bleiben.

Im Gegensatz zum Stand der Technik, bei dem mechanische Belastungen (insbesondere Längsdehnungen) bei Verwendung eines

Metall- oder Edelstahlröhrchens mit integrierten Lichtleitern problematisch ist, werden erfindungsgemäß geeignete konstruktive Maßnahmen vorgestellt, die das Metall- oder Edelstahlröhrchen weitestgehend von den mechanischen Belastungen über das eigentliche Wireline Cable entkoppeln.

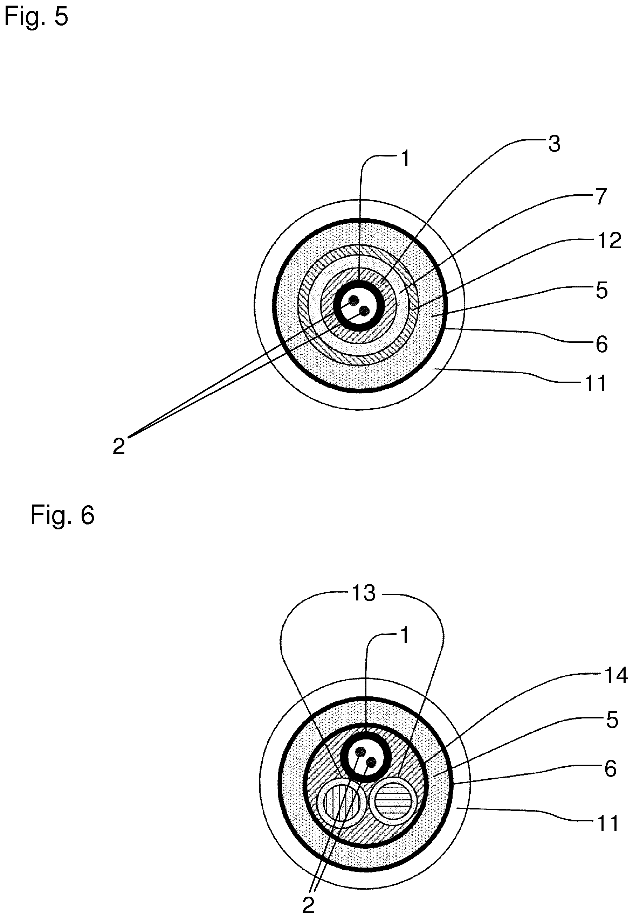

In einem weiteren Lösungsansatz (Fig. 5 bis Fig. 7) besteht die Modifikation beispielsweise in dem Austausch der metallischen Zugentlastungselemente gegen "Low-Modulus Aramid" Fasern.

Die Längsdehnung wird durch das geringere Kabelgewicht und das kleinere Elastizitätsmodul von Aramid ausreichend reduziert, so dass die Deformationen des Edelstahlröhrchens unter Zugbelastung ausgeschlossen sind.

Das in Fig. 1 abgebildete Ausführungsbeispiel umfasst ein metallisches Röhrchen 1, das vorzugsweise aus Edelstahl, alternativ aus Nickellegierungen oder Aluminium oder Aluminiumlegierungen besteht. Es kann vorgesehen sein, dass das Röhrchen als doppellagiges, dreilagiges oder mehrlagiges Röhrchen ausgebildet ist. Eine derartige Gestaltung ist in der Regel mechanisch stabiler als Standard-Metallröhrchen und ist knickfest sowie druckfest.

In dem Röhrchen 1 sind in dem abgebildeten Ausführungsbeispiel zwei Lichtleiter 2 angeordnet. Es besteht durchaus die Möglichkeit, mehr oder weniger als zwei Lichtleiter 2 vorzusehen. Weiterhin kann im Hohlraum des Röhrchens 1 eine zusätzliche Füllmasse wie beispielsweise ein Gel vorgesehen sein.

Die Lichtleiter 2 können zur faseroptischen Sensorik von beispielsweise Temperatur und/oder Druck und/oder Vibration dienen. Die Lichtleiter 2 können Singlemode- oder Multimode-Fasern sein, welche zur Erhöhung der mechanischen, chemischen und thermischen Resistenz mit einem Coating aus beispielsweise Acrylat, Karbon, oder vorzugsweise Polyimid versehen sein können. Die Lichtleiter 2 liegen mit einer Überlänge im Röhrchen 1, wobei die Überlänge beispielsweise ein Tausendstel der Länge beträgt.

Das Röhrchen 1 ist außen mit einem Leiter 3, vorzugsweise aus Kupfer, alternativ aus Aluminium oder anderen gut leitfähigen Legierungen oder Metallen versehen. Der Leiter 3 ist als Umseilung, als Gewebe oder als Folienbandierung ausgebildet und dient als Innenleiter für die Spannungsversorgung des faseroptischen Kabels. Durch die Ausbildung als Umseilung, Gewebe oder Folienbandierung ergibt sich eine zusätzliche Korsettwirkung als mechanischer Schutz für das Röhrchen 1.

Alternativ dazu kann ein elektrisch leitendes Gewebe/Geflecht, vorzugsweise aus Kupfer, und zusätzlich eine elektrisch leitende Lage, vorzugsweise aus Kupfer, auf dem Röhrchen 1 vorgesehen werden.

Das in Fig. 1 abgebildete Ausführungsbeispiel umfasst weiterhin eine außerhalb des Leiters 3 angeordnete Folie 4 als Trennmittel oder Bandierung. Die Folie 4 besteht vorzugsweise aus PTFE. Die Folie 4 kann als Trennmittel oder Trennschicht der mechanischen Entkopplung dienen.

Es sind weiterhin längslaufende Fasern 5, vorzugsweise aus Aramid, außerhalb der Folie 4 vorgesehen, die als Verstärkungsmittel beziehungsweise als Zugentlastungselemente für das Röhrchen 1 dienen.

Anstelle der Fasern 5 kann eine zweilagige oder mehrlagige Umseilung mit Links- und Rechtsschlag vorgesehen sein.

Eine weitere Folie 6 ist außerhalb der Fasern 5 oder der zweilagigen Umseilung mit Links- und Rechtsschlag vorgesehen. Die weitere Folie 6 kann als Bandierung oder längslaufend ausgestaltet sein und vorzugsweise aus PTFE bestehen. Die weitere Folie 6 kann ebenfalls als Trennmittel oder Trennschicht der mechanischen Entkopplung dienen.

Außerhalb der Folie 6 ist eine Isolierung 7, insbesondere eine Hochspannungsisolierung vorgesehen, die insbesondere aus einem chemisch resistenten und temperaturbeständigen Kunststoff wie beispielsweise aus Fluorpolymer, vorzugsweise EPR oder ETFE besteht.

Außerhalb der Isolierung 7 sind optional längslaufende Fasern 8, vorzugsweise aus Aramid, vorgesehen, die als Verstärkungsmittel oder als zusätzliche Zugentlastungselemente für die Isolierung 7 dienen. Alternativ kann eine zwei- oder mehrlagige Umseilung mit Links und Rechtsschlag vorgesehen sein.

Ebenfalls optional kann außerhalb der längslaufenden Fasern 8 eine Bandierung 9, vorzugsweise aus Metallfolie, zum Schutz der Isolierung gegen die innere Lage des im nachfolgenden noch beschriebenen Zugseiles 10 vorgesehen sein.

Das Zugseil 10 ist weiter außen als zweilagige Armierung vorgesehen, die insbesondere einen Kreuzschlag mit links und rechts verlaufenden Teilen 10a, 10b aufweist. Alternativ dazu kann eine mehrlagige Ausführung im Kreuzschlag des Zugseils 10 vorgesehen sein. Als Material des Zugseils 10 kann ein metallisches Material, vorzugsweise G-GIPS oder GHS-GEIPS, verwendet werden. Durch die Verwendung eines metallischen Materials kann das Zugseil 10 als Rückleiter dienen.

Bei dem Ausführungsbeispiel gemäß Fig. 2 ist weiterhin außerhalb des Zugseils 10 ein Außenmantel 11 aus chemisch resistentem und temperaturbeständigem Kunststoff, beispielsweise aus Fluorpolymer, vorzugsweise PEEK oder ETFE, mit glatter Oberfläche angeordnet.

Unter der Voraussetzung, dass die Anforderungen an den Druck innerhalb Down Hole Bore und den Außendurchmesser des Wireline-Kabels erfüllt werden, kann zusätzlich ein Außenmantel extrudiert sein.

Über die Folien 4, 6 sind die inneren Elemente mechanisch entkoppelt, so dass ein "Gleiten" dieser inneren Elemente unter Biegung und Zugbelastung begünstigt wird.

Unter der Voraussetzung, dass die mechanischen Belastungen des einlagigen, doppellagigen oder mehrlagigen Metallröhrchens im elastischen Bereich ablaufen, ist die Funktionalität der Lichtleiter 2 ohne weitere Einschränkungen zu erwarten.

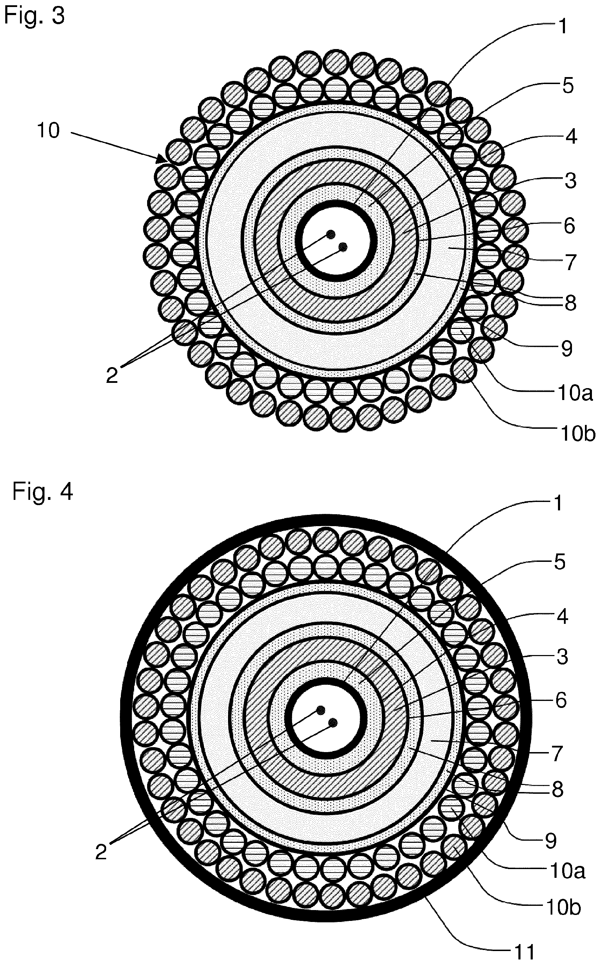

Fig. 3 zeigt eine erfindungsgemäße Ausführungsform mit einem metallischen Röhrchen 1, in deren Innerem wie bei den Ausführungsbeispielen gemäß Fig. 1 und Fig. 2 Lichtleiter 2 vorgesehen sind. Unterschiedlich zu diesen Ausführungsbeispielen sieht die erfindungsgemäße Ausführungsform gemäß Fig. 3 vor, dass die vorzugsweise aus Aramid bestehenden längslaufenden als Verstärkungsmittel dienenden Fasern 5 an der Außenseite des Röhrchens 1 angeordnet sind und die Funktion von Zugentlastungselementen für das Röhrchen 1 erfüllen.

Auch hier kann alternativ eine zwei- oder mehrlagige Umseilung mit Links und Rechtsschlag vorgesehen sein.

Auf der Außenseite der Fasern 5 ist bei der erfindungsgemäßen Ausführungsform gemäß Fig. 3 die als Trennmittel oder Trennschicht der mechanischen Entkopplung dienende Folie 4 angeordnet.

Die Folie 4 ist von dem Leiter 3 umgeben, der insbesondere die gleichen Eigenschaften wie der im Zusammenhang mit Fig. 1 beschriebene Leiter 3 aufweisen kann.

Außerhalb des Leiters 3 ist bei der erfindungsgemäßen Ausführungsform gemäß Fig. 3 eine weitere Folie 6 angeordnet, die wie die Folie 6 des ersten Ausführungsbeispiels ebenfalls als Trennmittel oder Trennschicht der mechanischen Entkopplung dienen kann.

Weiterhin ist bei der Ausführungsform gemäß Fig. 3 außerhalb der Folie 6 die Isolierung 7 angeordnet. Optional sind wie bei dem ersten Ausführungsbeispiel außerhalb der Isolierung 7 die längslaufenden als Verstärkungsmittel dienenden Fasern 8 und die Bandierung 9 vorgesehen. Allerdings können bei der Ausführungsform gemäß Fig. 3 vergleichbare längslaufende als Verstärkungsmittel dienende Fasern 8 auch alternativ oder zusätzlich auf der Innenseite der Isolierung 7 vorgesehen sein.

Außen an die Bandierung 9 schließt sich wie bei dem ersten Ausführungsbeispiel das Zugseil 10 an.

Bei der erfindungsgemäßen Ausführungsform gemäß Fig. 4 ist wie bei dem Ausführungsbeispiel gemäß Fig. 2 ein Außenmantel 11 vorgesehen.

Unter der Voraussetzung, dass die Anforderungen an den Druck innerhalb Down Hole Bore und den Außendurchmesser des Wireline-Kabels erfüllt werden, kann zusätzlich dieser Außenmantel 11 extrudiert sein.

Über den konstruktiven Aufbau der Teile 1 und 3 bis 6 sind die Elemente des Kerns mechanisch entkoppelt, so dass ein "Gleiten" der Kernelemente gegeneinander unter Biegung und Zugbelastung begünstigt wird.

Unter der Voraussetzung, dass die mechanischen Belastungen des, insbesondere doppellagigen, Röhrchens 1 im plastischen Bereich ablaufen, ist die Funktionalität der Lichtleiter 2 ohne weitere Einschränkungen zu erwarten.

Fig. 5 zeigt ein Ausführungsbeispiel mit einem metallischen Röhrchen 1, in dessen Innerem wie bei dem in Fig. 1 und Fig. 2 abgebildeten Ausführungsbeispiel Lichtleiter 2 vorgesehen sind. Wie bei dem in Fig. 1 abgebildeten Ausführungsbeispiel ist auf der Außenseite des Röhrchens 1 ein Leiter 3 vorgesehen, der dem Leiter 3 des Ausführungsbeispiels gemäß Fig. 1 entsprechen kann.

Unterschiedlich zu dem in Fig. 1 abgebildeten Ausführungsbeispiel sieht das Ausführungsbeispiel gemäß Fig. 5 vor, dass auf der Außenseite des Leiters 3 eine Isolierung 7 vorgesehen ist, die der Isolierung 7 des ersten Ausführungsbeispiels entsprechen kann.

Auf der Außenseite dieser Isolierung 7 ist ein zusätzlicher Leiter 12 angeordnet, der ebenfalls vorzugsweise aus Kupfer, alternativ aus Aluminium oder anderen gut leitfähigen Legierungen oder Metallen besteht. Der Leiter 12 ist als Umseilung, als Gewebe oder als Folienbandierung ausgebildet und dient als Rückleiter für die Spannungsversorgung des faseroptischen Kabels.

Es sind weiterhin längslaufende Fasern 5, vorzugsweise aus Aramid, außerhalb des zusätzlichen Leiters 12 vorgesehen, die als Verstärkungsmittel oder als Zugentlastungselemente dienen.

Außerhalb der Fasern 5 ist eine als Bandierung dienende Folie 6 angeordnet, die vorzugsweise aus PETP besteht. Die Folie 6 kann als Trennmittel oder Trennschicht der mechanischen Entkopplung dienen.

Das Ausführungsbeispiel gemäß Fig. 5 umfasst weiterhin einen außerhalb der Folie 6 angeordneten Außenmantel 11 aus chemisch resistentem und temperaturbeständigem Kunststoff, beispielsweise aus Fluorpolymer, vorzugsweise PEEK oder ETFE, mit glatter Oberfläche.

Das in Fig. 6 abgebildete Ausführungsbeispiel umfasst ein metallisches Röhrchen 1, das wie das Röhrchen der ersten Ausführungsbeispiele ausgebildet sein kann und ebenfalls einen oder mehrere Lichtleiter 2 in seinem Inneren aufweist. Weiterhin kann im Hohlraum des Röhrchens 1 eine zusätzliche Füllmasse wie beispielsweise ein Gel vorgesehen sein.

Parallel zu dem Röhrchen 1 verlaufend sind zwei als elektrische Hin- und Rückleiter dienende Leiter 13, vorzugsweise aus Kupfer, mit einer Leiterisolierung angeordnet. Die Leiterisolierung kann aus einem chemisch resistenten und temperaturbeständigen Kunststoff, beispielsweise aus Fluorpolymer, vorzugsweise aus EPR oder ETFE bestehen.

Es ist weiterhin eine Verseilung 14 vorgesehen, die das Röhrchen 1 und die beiden elektrischen Leiter 13 umgibt. Es sind weiterhin längslaufende Fasern 5, vorzugsweise aus Aramid, außerhalb der Verseilung 14 vorgesehen, die als Verstärkungsmittel beziehungsweise als Zugentlastungselemente dienen.

Anstelle der Fasern 5 kann eine zweilagige oder mehrlagige Umseilung mit Links- und Rechtsschlag vorgesehen sein.

Außerhalb der Fasern 5 ist eine als Bandierung dienende Folie 6 angeordnet, die vorzugsweise aus PETP besteht. Die Folie 6 kann als Trennmittel oder Trennschicht der mechanischen Entkopplung dienen.

Das Ausführungsbeispiel gemäß Fig. 6 umfasst weiterhin einen außerhalb der Folie 6 angeordneten Außenmantel 11 aus chemisch resistentem und temperaturbeständigem Kunststoff, beispielsweise aus Fluorpolymer, vorzugsweise PEEK oder ETFE, mit glatter Oberfläche.

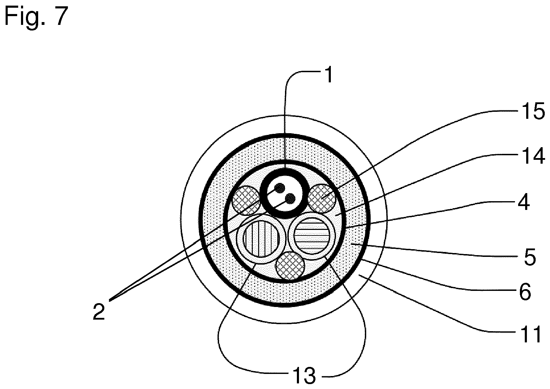

Das in Fig. 7 abgebildete Ausführungsbeispiel umfasst ein metallisches Röhrchen 1, das wie das Röhrchen der ersten Ausführungsbeispiele ausgebildet sein kann und ebenfalls einen oder mehrere Lichtleiter 2 in seinem Inneren aufweist. Weiterhin kann im Hohlraum des Röhrchens 1 eine zusätzliche Füllmasse wie beispielsweise ein Gel vorgesehen sein.

Parallel zu dem Röhrchen 1 verlaufend sind zwei als elektrische Hin- und Rückleiter dienende Leiter 13, vorzugsweise aus Kupfer, mit einer Leiterisolierung angeordnet. Die Leiterisolierung kann aus einem chemisch resistenten und temperaturbeständigen Kunststoff, beispielsweise aus Fluorpolymer, vorzugsweise aus EPR oder ETFE bestehen.

Weiterhin sind parallel zu dem Röhrchen 1 und den Leitern 13 verlaufende Zugentlastungselemente 15, vorzugsweise aus GFK, vorgesehen. Es besteht die Möglichkeit, eine Füllung in den Zwischenräumen zwischen dem Röhrchen 1, den Leitern 13 und den Zugentlastungselementen 15 vorzusehen.

Es ist weiterhin eine Verseilung 14 vorgesehen, die das Röhrchen 1, die beiden elektrischen Leiter 13 und die Zugentlastungselemente 15 umgibt.

Das in Fig. 7 abgebildete Ausführungsbeispiel umfasst weiterhin eine außerhalb der Verseilung 14 angeordnete Folie 4 zum Abstützen des Verseilverbandes. Die Folie 4 besteht vorzugsweise aus PTFE. Die Folie 4 kann auch als Trennmittel oder Trennschicht der mechanischen Entkopplung dienen.

Es sind weiterhin längslaufende Fasern 5, vorzugsweise aus Aramid, außerhalb der Folie 4 vorgesehen, die als Verstärkungsmittel beziehungsweise als Zugentlastungselemente für das Röhrchen 1 dienen.

Anstelle der Fasern 5 kann eine zweilagige oder mehrlagige Umseilung mit Links- und Rechtsschlag vorgesehen sein.

Eine weitere Folie 6 ist außerhalb der Fasern 5 oder der zweilagige Umseilung mit Links- und Rechtsschlag vorgesehen. Die weitere Folie 6 kann als Bandierung oder längslaufend ausgestaltet sein und vorzugsweise aus PTFE bestehen. Die weitere Folie 6 kann ebenfalls als Trennmittel oder Trennschicht der mechanischen Entkopplung dienen.

Das Ausführungsbeispiel gemäß Fig.7 umfasst weiterhin einen außerhalb der Folie 6 angeordneten Außenmantel 11 aus chemisch resistentem und temperaturbeständigem Kunststoff, beispielsweise aus Fluorpolymer, vorzugsweise PEEK oder ETFE, mit glatter Oberfläche.

## Patentansprüche

1. Faseroptisches Kabel für den Einsatz in einem Bohrloch, umfassend
- mindestens einen Lichtwellenleiter (2),
- mindestens ein metallisches Röhrchen (1), das den mindestens einen Lichtwellenleiter (2) umgibt,
- mindestens eine weitere Lage, die das mindestens eine Röhrchen (1) umgibt und als elektrischer Leiter (3) ausgebildet ist, der als Hin- und/oder Rückleiter dient,
- Trennmittel, die eine Folie (4) umfassen, die radial zwischen dem mindestens einen Röhrchen (1) und dem elektrischen Leiter (3) angeordnet ist und zu einer mechanischen Entkopplung des mindestens einen Röhrchens (1) von dem elektrischen Leiter (3) beiträgt oder diese bewirkt,
**dadurch gekennzeichnet, dass** das faseroptische Kabel Verstärkungsmittel umfasst, die zwischen dem Röhrchen (1) und den Trennmitteln angeordnet sind.

2. Faseroptisches Kabel nach Anspruch 1, **dadurch gekennzeichnet, dass** die Verstärkungsmittel als Zugentlastung dienen können und/oder zu einer Gewichtsreduzierung des faseroptischen Kabels beitragen können.

3. Faseroptisches Kabel nach einem der Ansprüche 1 oder 2, **dadurch gekennzeichnet, dass** die Verstärkungsmittel Fasern (5, 8) umfassen oder aus Fasern (5, 8) bestehen.

4. Faseroptisches Kabel nach einem der Ansprüche 1 bis 3, **dadurch gekennzeichnet, dass** die Verstärkungsmittel Aramidfasern und/oder Glasfasern und/oder Kohlenstofffasern umfassen oder aus Aramidfasern und/oder aus Glasfasern und/oder aus Kohlenstofffasern bestehen.

5. Faseroptisches Kabel nach Anspruch 1, **dadurch gekennzeichnet, dass** die Verstärkungsmittel als Armierung, insbesondere als Kreuzschlag ausgebildet sind.

6. Faseroptisches Kabel nach einem der Ansprüche 1 bis 5, **dadurch gekennzeichnet, dass** die Trennmittel eine weitere Folie (6) umfassen, wobei zwischen den beiden Folien (4, 6) der elektrische Leiter (3) angeordnet ist.

7. Faseroptisches Kabel nach Anspruch 6, **dadurch gekennzeichnet, dass** die äußere der beiden Folien (4, 6) von Teilen (10a, 10b) eines Zugseils umgeben ist, das vorzugsweise leitend sein kann.

## Claims

1. Fibre-optic cable for use in a borehole, comprising
- at least one optical waveguide (2),
- at least one metallic tube (1) which surrounds the at least one optical waveguide (2),
- at least one additional layer which surrounds the at least one tube (1) and is configured as an electrical conductor (3) which serves as a supply and/or return conductor,
- separating means which comprise a foil (4) which is disposed radially between the at least one tube (1) and the electrical conductor (3) and contributes to or causes mechanical decoupling of the at least one tube (1) from the electrical conductor (3),
**characterised in that** the fibre-optic cable comprises reinforcing means which are disposed between the tube (1) and the separating means.

2. Fibre-optic cable according to claim 1, **characterised in that** the reinforcing means can serve as a strain relief and/or can contribute to weight reduction of the fibre-optic cable.

3. Fibre-optic cable according to any of claims 1 or 2, **characterised in that** the reinforcing means comprise fibres (5, 8) or consist of fibres (5, 8).

4. Fibre-optic cable according to any of claims 1 to 3, **characterised in that** the reinforcing means comprise aramid fibres and/or glass fibres and/or carbon fibres or consist of aramid fibres and/or glass fibres and/or carbon fibres.

5. Fibre-optic cable according to claim 1, **characterised in that** the reinforcing means are formed as a reinforcement, in particular as a crosslay.

6. Fibre-optic cable according to any of claims 1 to 5, **characterised in that** the separating means comprises a further foil (6), wherein the electrical conductor (3) is disposed between the two foils (4, 6).

7. Fibre-optic cable according to claim 6, **characterised in that** the outermost of the two foils (4, 6) is surrounded by parts (10a, 10b) of a traction cable which can preferably be conductive.

## Revendications

1. Câble de fibres optiques pour l'utilisation dans un trou de forage, comprenant
- au moins un guide d'onde optique (2),
- au moins un tube métallique (1) qui entoure le au moins un guide d'onde optique (2),
- au moins une couche supplémentaire qui entoure le au moins un tube (1) et est conçue sous la forme d'un conducteur électrique (3) qui sert de conducteur aller et/ou retour,
- des moyens de séparation comprenant un film (4), qui est agencé radialement entre le au moins un tube (1) et le conducteur électrique (3) et contribue à un découplage mécanique du au moins un tube (1) à partir du conducteur électrique (3) ou le provoque,
**caractérisé en ce que** le câble de fibres optiques comprend des moyens de renforcement qui sont agencés entre le tube (1) et les moyens de séparation.

2. Câble de fibres optiques selon la revendication 1, **caractérisé en ce que** les moyens de renforcement peuvent servir de décharge de traction et/ou peuvent contribuer à une réduction de poids du câble de fibres optiques.

3. Câble de fibres optiques selon l'une quelconque des revendications 1 ou 2, **caractérisé en ce que** les moyens de renforcement comprennent des fibres (5, 8) ou sont constitués de fibres (5, 8).

4. Câble de fibres optiques selon l'une quelconque des revendications 1 à 3, **caractérisé en ce que** les moyens de renforcement comprennent des fibres d'aramide et/ou des fibres de verre et/ou des fibres de carbone ou sont constitués de fibres d'aramide et/ou de fibres de verre et/ou de fibres de carbone.

5. Câble de fibres optiques selon la revendication 1, **caractérisé en ce que** les moyens de renforcement sont conçus sous la forme d'une armature, notamment sous la forme d'un câblage croisé.

6. Câble de fibres optiques selon l'une quelconque des revendications 1 à 5, **caractérisé en ce que** les moyens de séparation comprennent un film supplémentaire (6), dans lequel le conducteur électrique (3) est agencé entre les deux films (4, 6).

7. Câble de fibres optiques selon la revendication 6, **caractérisé en ce que** l'extérieur des deux films (4, 6) est entouré de parties (10a, 10b) d'un câble de traction, qui peut de préférence être conducteur.
